# FASCICULE DE BREVET EUROPEEN

(11) **EP 3 093 601 B1**
(45) Date de publication et mention de la délivrance du brevet: **27.02.2019**
(21) Numéro de dépôt: 16169124.1
(22) Date de dépôt: 11.05.2016
(51) Int. Cl.: F28D 7/10, F28D 21/00

(54) **ECHANGEUR THERMIQUE**
WÄRMETAUSCHER
HEAT EXCHANGER

(30) Priorité: 11.05.2015 FR 1554179
(43) Date de publication de la demande: 16.11.2016
(73) Titulaire: ALDES AERAULIQUE, 69200 Venissieux Cedex (FR)
(72) Inventeur: LEFEBVRE, Bruno, 38320 BRIE ET ANGONNES (FR); BUSEYNE, Serge, 31200 TOULOUSE (FR); LABAUME, Damien, 31570 PRESERVILLE (FR)
(74) Mandataire: Chevalier, Renaud Philippe

(56) Documents cités:
- EP-A1- 2 375 181
- US-A1- 2008 173 433

## Description

La présente invention relève du domaine des échangeurs thermiques pour dispositif de ventilation double flux. En particulier, l'invention se rapporte à un échangeur thermique selon le préambule de la revendication 1, et tel que divulgué par le document EP 2 375 181 A1.

On entend par un dispositif de ventilation double-flux des dispositifs comprenant souvent deux ventilateurs assurant un débit sensiblement identique et dont l'un est destiné à insuffler de l'air dans un bâtiment et dont l'autre est destiné à extraire l'air du bâtiment à l'extérieur dudit bâtiment.

Ces dispositifs de ventilation comprennent en particulier un échangeur thermique réalisé par le collage et/ou la soudure et/ou le pliage d'une pluralité de plaques délimitant des zones de passage d'air. Les zones de passages d'air sont distinctes ce qui permet de ne pas mélanger l'air entrant de l'air sortant

La plupart des échangeurs thermiques pour les dispositifs de ventilation double-flux, présentent la même configuration à savoir une alternance d'une pluralité de canaux d'air entrant et d'air sortant. La récupération d'énergie se fait alors principalement par conduction à travers une surface délimitant les canaux juxtaposés.

Pour réunir les canaux d'air entrant et les canaux d'air sortant et concentrer les flux d'air, les échangeurs thermiques comprennent une pièce d'adaptation à chaque extrémité. Ces pièces d'adaptation sont nécessaires et onéreuses de part la complexité structurelle qu'elles arborent. En outre, pour avoir un rendement performant, les pertes de charge associées à l'échangeur thermique sont élevées.

L'invention a pour but de remédier à tout ou partie des inconvénients précités.

L'invention a pour objet un échangeur thermique pour dispositif de ventilation double-flux comprenant au moins un premier canal configuré pour être traversé par un flux d'air sortant et au moins un deuxième canal configuré pour être traversé par un flux d'air entrant, le premier canal comprenant au moins une surface d'échange thermique commune avec le deuxième canal, le premier canal et le deuxième canal s'étendant chacun longitudinalement par rapport à un axe longitudinal de l'échangeur thermique caractérisé en ce que l'échangeur thermique comprend au moins une première portion transversale conductrice thermiquement comportant une première partie du premier canal et une première partie du deuxième canal, une deuxième portion transversale conductrice thermiquement comportant une deuxième partie du premier canal et une deuxième partie du deuxième canal, la première portion transversale étant reliée au moins partiellement à la deuxième portion transversale par un organe d'isolation thermique.

Ainsi, l'échangeur thermique présente une première portion transversale et la deuxième portion transversale qui favorisent les échanges thermiques dans une direction transversale de l'échangeur thermique et au moins un organe d'isolation thermique qui permet de limiter la conduction dans une direction longitudinale de l'échangeur thermique. Cette configuration permet d'augmenter dans le rendement de l'échangeur thermique de manière significative en concentrant les échanges thermiques dans une seule direction en l'espèce transversalement.

Avantageusement, la première portion transversale et/ou la deuxième portion transversale est réalisée en aluminium.

Selon une caractéristique de l'invention, l'organe d'isolation thermique présente une forme sensiblement identique à une portion transversale de l'échangeur thermique.

Selon une caractéristique de l'invention, l'organe d'isolation thermique est réalisé en matériau isolant ou peu conducteur. On entend par matériau peu conducteur des matériaux présentant une conductivité thermique inférieure à 1 W.m¹.K⁻¹. Avantageusement, l'organe d'isolation a une conductivité thermique au moins inférieure à la conductivité thermique que présente la ou les portions transversales de l'échangeur thermique.

Préférentiellement, l'organe d'isolation thermique est réalisé en matière plastique.

Selon une autre caractéristique de l'invention, l'organe d'isolation thermique est un rupteur thermique ou un joint.

Selon une caractéristique de l'invention, une pluralité d'ailettes conductrices s'étendent dans le premier canal et se prolongent dans le deuxième canal.

Selon une caractéristique de l'invention, les ailettes conductrices sont ménagées uniquement dans les portions transversales conductrices, l'organe d'isolation thermique étant dépourvu d'ailette conductrice. De manière alternative, l'organe d'isolation thermique est pourvu d'ailettes non conductrices sur tout ou partie de la géométrie dudit organe d'isolation thermique.

Selon une caractéristique de l'invention, des stries sont ménagées sur la pluralité d'ailettes conductrices, ce qui permet d'augmenter les surfaces d'échange et donc le rendement.

Selon une caractéristique de l'invention, les ailettes conductrices d'une première portion conductrice transversale sont disposées en alignement par rapport aux ailettes conductrices d'une deuxième portion transversale.

Selon une caractéristique de l'invention, les ailettes conductrices d'une première portion conductrice transversale sont disposées en quinconce par rapport aux ailettes conductrices d'une deuxième portion transversale, ce qui permet d'augmenter le rendement.

Selon une caractéristique de l'invention, l'organe d'isolation thermique forme un interstice entre la première portion transversale et la deuxième portion transversale, ledit interstice étant configuré pour l'évacuation de condensats, ce qui permet de diminuer, dans une grande proportion, le phénomène de givrage. En effet, dès qu'il va apparaitre des condensats, lesdits condensats vont s'écouler grâce à l'interstice formé par l'organe d'isolation thermique et vont être évacués hors de l'échangeur, ce qui permet de limiter la stagnation de condensat et donc de retarder, voire annuler la prise en givre de l'échangeur thermique.

Selon une caractéristique de l'invention, l'échangeur thermique comprend une pluralité de portions transversales séparées au moins partiellement les unes des autres par au moins un organe d'isolation thermique.

Selon une autre caractéristique de l'invention, les organes d'isolation thermique sont d'épaisseur différente.

Selon une autre caractérisation de l'invention, les portions transversales conductrices sont d'épaisseur différente.

Selon une autre caractéristique de l'invention, les organes d'isolation thermique sont de hauteur différente.

Selon une autre caractéristique de l'invention, l'organe d'isolation thermique est réalisé au moins partiellement en un matériau enthalpique, ce qui permet la migration de l'humidité d'un canal à l'autre.

Dans la présente invention, on entend par « matériau enthalpique », un matériau qui autorise les transferts de chaleur et d'humidité entre les flux d'air, l'humidité étant transférée sous forme de vapeur d'eau de la section à haute pression de vapeur à la section à basse pression de vapeur par diffusion. Cela évite en même temps le passage de gaz, d'odeurs et d'impuretés et le bien-être et le confort sont ainsi largement améliorés.

Selon une caractéristique de l'invention, le premier canal est agencé au moins partiellement autour du deuxième canal. Alternativement, le premier canal est positionné adjacent au deuxième canal.

Selon une caractéristique de l'invention, l'échangeur thermique comprend un troisième canal délimitant un couloir de déviation d'air, ce qui permet ponctuellement une transmission des flux d'air sans réalisation d'un échange thermique entre le flux d'air entrant et le flux d'air sortant permettant ainsi une circulation dans le circuit aéraulique sans échange thermique.

Selon une autre caractéristique de l'invention, le troisième canal est de forme parallélépipédique ou cylindrique.

Selon une caractéristique de l'invention, le deuxième canal est agencé au moins partiellement autour du troisième canal. Avantageusement, le troisième canal est positionné sensiblement au centre de l'échangeur thermique.

Alternativement, le troisième canal est agencé au moins partiellement autour du premier canal.

En variante, le troisième canal est positionné adjacent au premier canal ou au deuxième canal.

Selon une caractéristique de l'invention, un organe de régulation de flux d'air est logé dans le troisième canal, ledit organe de régulation étant configuré pour ouvrir et/ou obturer le troisième canal.

Avantageusement, l'obturation et l'ouverture du troisième canal peut être réalisé par une action manuelle ou mécanique.

Selon une autre caractéristique de l'invention, l'organe de régulation est non conducteur thermiquement.

Selon une autre caractéristique de l'invention, l'organe de régulation permet de canaliser le flux au centre de l'échangeur thermique.

Selon une caractéristique de l'invention, l'organe de régulation comprend un volet mobile.

Selon une caractéristique de l'invention, l'organe de régulation est réalisé directement avec l'échangeur thermique, ce qui permet une réalisation simple et économique. De plus il n'y a pas de pièce compliquée pour la récupération des flux d'air.

L'invention sera mieux comprise, grâce à la description ci-après, qui se rapporte à un mode de réalisation selon la présente invention, donné à titre d'exemple non limitatif et expliqué avec référence aux dessins schématiques annexés, dans lesquels:
- la figure 1 est une représentation schématique de face de l'échangeur thermique selon l'invention,
- la figure 2 est une représentation en perspective de l'échangeur thermique selon l'invention,
- la figure 3A est une vue de côté de l'échangeur thermique comprenant des organes d'isolation selon un premier mode de réalisation,
- la figure 3B est une vue en perspective de l'échangeur thermique du premier mode de réalisation représenté en figure 3A,
- la figure 3C est une vue de côté de l'échangeur thermique comprenant des organes d'isolation selon un deuxième mode de réalisation,
- la figure 3D est une vue en perspective de l'échangeur thermique du deuxième mode de réalisation représenté en figure 3C,
- la figure 3E est une vue de côté de l'échangeur thermique comprenant des organes d'isolation selon un troisième mode de réalisation,
- la figure 4 est une représentation de côté de l'évacuation des condensats de l'échangeur thermique,
- la figure 5 est une représentation en perspective de l'échangeur thermique selon l'invention comprenant un organe de régulation,
- les figures 6A à 6E sont des représentations en vue de face de l'échangeur thermique selon une première configuration de l'échangeur thermique,
- les figures 6F et 6G sont des représentations en vue de face de différentes formes de l'échangeur thermique selon l'invention selon une deuxième configuration de l'échangeur thermique,
- les figures 6H et 6J sont des représentations en vue de face de différentes formes de l'échangeur thermique selon l'invention selon une troisième configuration de l'échangeur thermique,
- la figure 7 illustre une variante de réalisation de l'échangeur thermique dans lequel les ailettes conductrices sont agencées en quinconce.

Quel que soit la configuration de l'échangeur thermique 1 selon l'invention, ledit échangeur thermique 1 comprend au moins un premier canal 2, un deuxième canal 3.

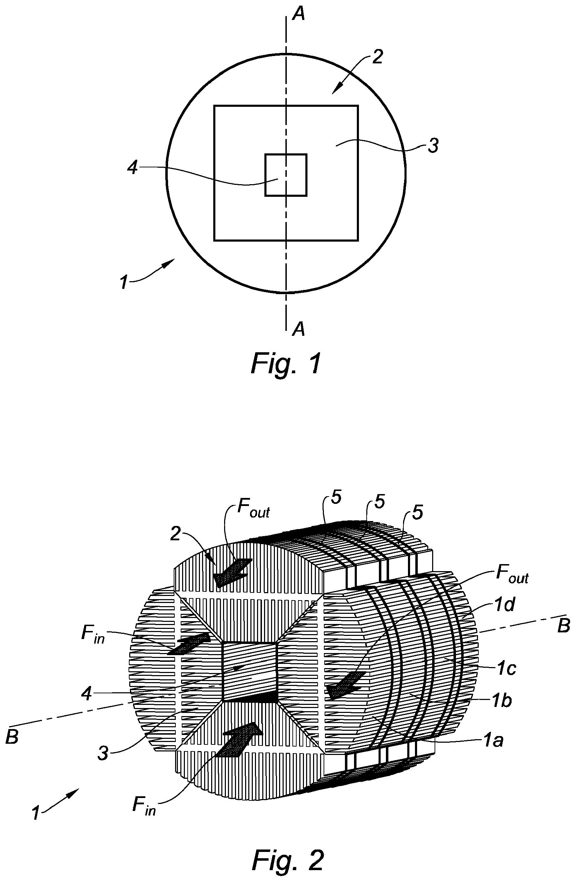

Les figures 1 à 6E illustrent une première configuration de l'échangeur thermique 1 selon l'invention dans laquelle le premier canal 2 est agencé au moins partiellement autour du deuxième canal 3.

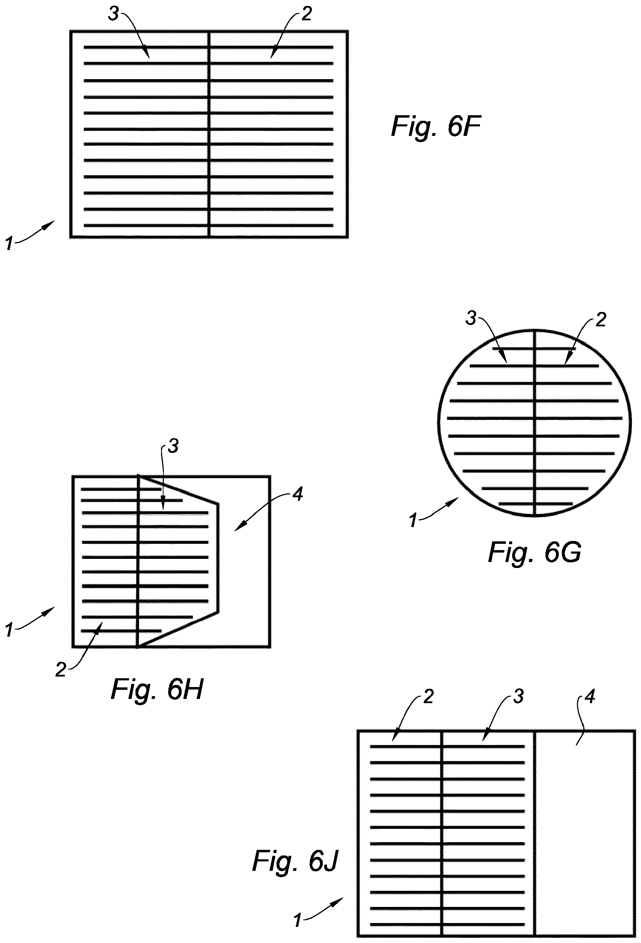

Les figures 6F et 6G illustrent une deuxième configuration de l'échangeur thermique 1 selon l'invention dans laquelle le premier canal 2 est positionné à côté du deuxième canal 3 et l'échangeur thermique 1 ne comprend uniquement qu'un premier canal 2 et un deuxième canal 3.

Les figures 6H et 6J illustrent une troisième configuration de l'échangeur thermique 1 selon l'invention dans laquelle l'échangeur thermique 1 comprend thermique comprend un troisième canal 4 adjacent au deuxième canal 3.

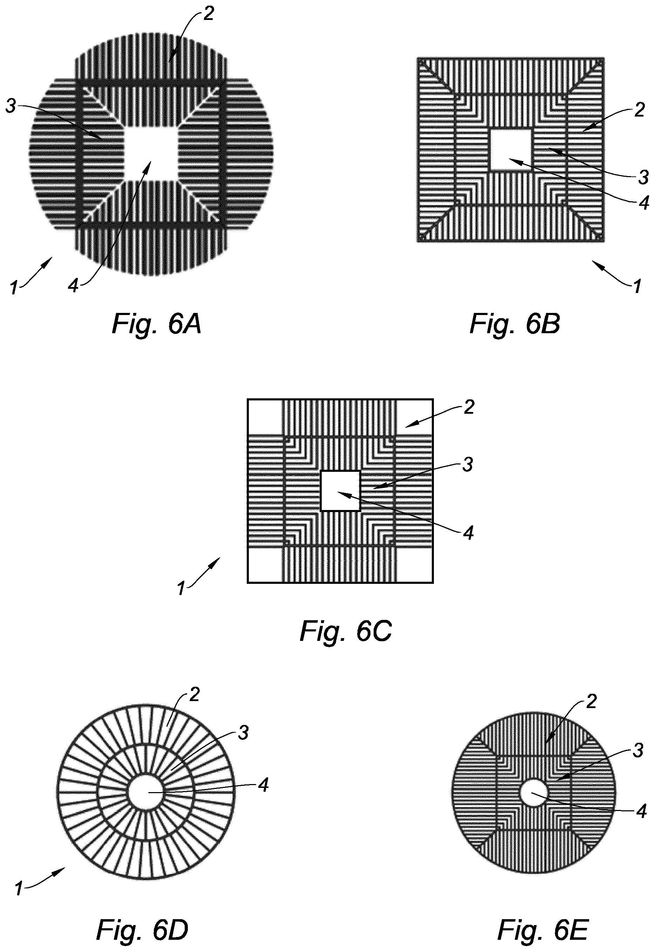

Dans les exemples représentés aux figures 6A à 6J, le premier canal 2 est configuré pour être traversé par un flux d'air sortant Fₒᵤₜ de l'échangeur. En outre le deuxième canal 3 est configuré pour être traversé par un flux d'air entrant Fᵢₙ de l'échangeur 1.

Comme on peut le voir notamment en figure 2, le premier canal 2 et le deuxième canal 3 s'étendent chacun longitudinalement par rapport à un axe longitudinal B-B de l'échangeur thermique 1.

Dans les exemples illustrés aux figures 1 à 6E, 6H et 6J, l'échangeur thermique 1 comprend un troisième canal 4 délimitant un couloir de déviation d'air. Préférentiellement, et comme illustré notamment aux figures 1, 2, 3B, 3D, 5, 6A à 6E, le troisième canal 4 est positionné sensiblement au centre de l'échangeur thermique 1. En variante, le troisième canal 4 est adjacent au deuxième canal 3 et est positionné sur un côté de l'échangeur thermique 1, comme illustré aux figures 6H et 6J.

Selon la première configuration, le deuxième canal 3 est agencé au moins partiellement autour du troisième canal 4.

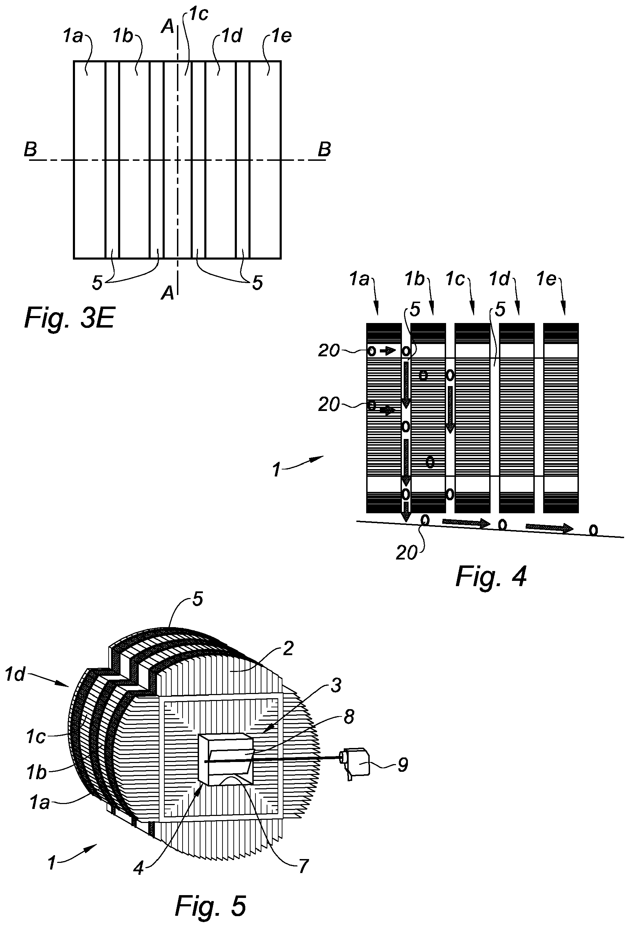

Selon l'invention et quelle que soit la configuration de l'échangeur thermique 1 ou le mode de réalisation de l'échangeur thermique 1, l'obturation et l'ouverture du troisième canal 4 peut être réalisé par une commande manuelle ou mécanique 9. Comme visible en figure 5, un organe de régulation de flux d'air 7 est logé dans le troisième canal 4, ledit organe de régulation 7 étant configuré pour ouvrir et/ou obturer le troisième canal 4. L'organe de régulation 7 comprend un volet mobile 8.

Dans l'exemple illustré aux figures 1 à 6J, l'organe de régulation est non conducteur thermiquement.

En outre, quel que soit le mode de réalisation des organes d'isolation 5 et comme illustré aux figures 2 à 5, l'échangeur thermique 1 comprend au moins une première portion transversale la conductrice thermiquement comportant une première partie du premier canal 2 et une première partie du deuxième canal 3 et une deuxième portion transversale 1b conductrice thermiquement comportant une deuxième partie du premier canal 2 et une deuxième partie du deuxième canal 3. La première portion transversale la est reliée à la deuxième portion transversale 1b par un organe d'isolation thermique 5.

Quel que soit le mode de réalisation, l'échangeur thermique 1 comprend une pluralité de section transversales la, 1b, 1c, 1d, le conductrices. Chaque portion transversale 1a, 1b, 1c, 1d, 1e, de l'échangeur thermique 1 est conductrice thermiquement.

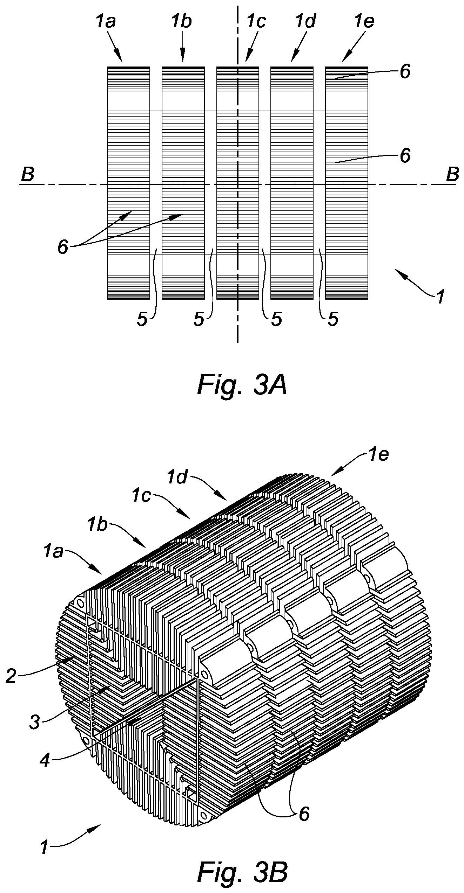

Les figures 3A à 3E présentent différents modes de réalisation de l'échangeur thermique 1.

Selon un premier mode de réalisation représenté aux figures 3A et 3B, chaque organe d'isolation 5 est positionné entre deux portions transversales. Chaque organe d'isolation 5 est identique. Chaque organe d'isolation 5 s'étend partiellement entre les portions transversales de sorte que seule une partie de chaque portion transversale est reliée à une autre portion transversale par l'organe d'isolation 5.

Selon le premier mode de réalisation, l'organe de d'isolation 5 présente une hauteur inférieure à la hauteur des portions transversales 1a, 1b, 1c, 1d, 1^{e} comme illustré en figure 3A.

En variante du premier mode de réalisation, l'épaisseur de chaque organe d'isolation 5 varie.

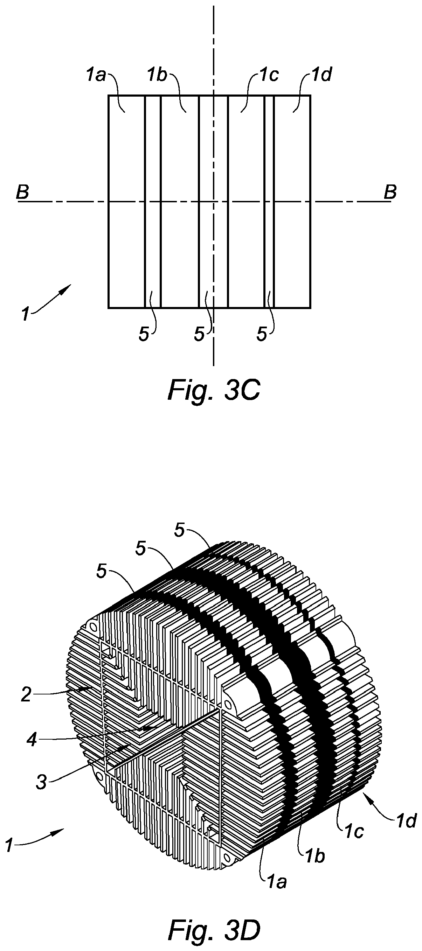

Selon le deuxième mode de réalisation représentée aux figures 3c et 3D, chaque organe d'isolation 5 est positionné entre deux portions transversales. Chaque organe d'isolation 5 s'étend partiellement entre les portions transversales de sorte que chaque portion transversale est reliée entièrement à une autre portion transversale par l'organe d'isolation 5.

En outre, l'épaisseur de chaque organe d'isolation 5 varie.

Selon le troisième mode de réalisation représenté en figure 3E, chaque organe d'isolation 5 est positionné entre deux portions transversales. Chaque organe d'isolation 5 est identique. Chaque organe d'isolation 5 s'étend partiellement entre les portions transversales de sorte que chaque portion transversale est reliée entièrement à une autre portion transversale par l'organe d'isolation 5.

Le troisième mode de réalisation des organes d'isolation 5 diffère du premier mode de réalisation seulement en ce que chaque organe d'isolation 5 s'étend sur toute la hauteur de chaque portion transversale. Chaque organe d'isolation 5 présente une forme sensiblement identique à la forme des portions transversales.

Quel que soit le mode de réalisation des organes d'isolation 5, les organes d'isolation 5 peuvent être de la même forme que les portions transversales qu'ils relient et en particulier peuvent présenter des ailettes non conductrices sur tout ou partie de leur géométrie.

Comme illustré en figure 2, le premier canal 2 comprend une pluralité de surfaces d'échange thermique 6 communes avec le deuxième canal 2. En l'espèce, l'échangeur thermique 1 comprend une pluralité d'ailettes 6 conductrices s'étendant dans le premier canal 2 et se prolongeant dans le deuxième canal 3.

Comme on peut le voir en figure 4, chaque organe d'isolation thermique 5 forme un interstice 5a configuré pour l'évacuation de condensats 20. Comme illustré en figure 4, lesdits condensats 20 s'écoulent grâce aux interstices 5a formés par les organes d'isolation thermique 5 et vont être évacués hors de l'échangeur thermique 1.

Aux figures 6A à 6E sont proposées différentes configurations de l'échangeur thermique 1.

En figure 6A, le premier canal 2 est de forme cylindrique, les ailettes étant disposées en croix par rapport au deuxième canal 3. Ainsi, des zones du premier canal 2 ne sont pas entièrement comblées par des ailettes conductrices. Lesdites zones sont comblées soit par des ailettes soit par des éléments de fixation permettant la fixation de l'échangeur thermique 1 comme illustré en figure 3D par exemple.

Le premier canal 2 entoure le deuxième canal 3. Le deuxième canal 3 est de forme parallélépipédique. Le troisième canal 4 est de forme parallélépipédique. Le deuxième canal 3 entoure le troisième canal 4.

En figure 6B, le premier canal 2 est de forme parallélépipédique. Le premier canal 2 entoure le deuxième canal 3. Le deuxième canal 3 est de forme parallélépipédique. Le troisième canal 4 est de forme parallélépipédique. Le deuxième canal 3 entoure le troisième canal 4. Les ailettes peuvent ou non être en contact avec les extrémités d'autres ailettes s'étendant dans une direction sensiblement perpendiculaire par rapport auxdites premières ailettes comme illustré en figure 6B dans le deuxième canal ou bien être séparées par un élément de liaison comme visible dans le premier canal 2. Bien évidemment, le premier canal 1 peut présenter des ailettes qui sont en contact avec les extrémités d'autres ailettes orientées dans une direction sensiblement perpendiculaire et le deuxième canal 3 peut présenter des ailettes séparées par des éléments de liaison.

En figure 6C, le premier canal 2 est de forme parallélépipédique, les ailettes étant disposées en croix par rapport au deuxième canal 3. Ainsi, des zones du premier canal 2 ne sont pas entièrement comblées par des ailettes conductrices. Le premier canal 2 entoure le deuxième canal 3. Le deuxième canal 3 est de forme parallélépipédique. Le troisième canal 4 est de forme parallélépipédique. Le deuxième canal 3 entoure le troisième canal 4. Les ailettes sont disposées en croix par rapport au deuxième canal 3. Ainsi, des zones du premier canal 2 ne sont pas entièrement comblées par des ailettes conductrices. Lesdites zones sont comblées soit par des ailettes soit par des éléments de fixation permettant la fixation de l'échangeur thermique 1 comme illustré en figure 3D par exemple.

En figure 6D, le premier canal 2 est de forme cylindrique. Le premier canal 2 entoure le deuxième canal 3. Le deuxième canal 3 est de forme cylindrique. Le troisième canal 4 est de forme cylindrique. Le deuxième canal 3 entoure le troisième canal 4.

En figure 6E, le premier canal 2 est de forme cylindrique. Le premier canal 2 entoure le deuxième canal 3. Le deuxième canal 3 est de forme parallélépipédique. Le troisième canal 4 est de forme cylindrique. Le deuxième canal 3 entoure le troisième canal 4. Les ailettes sont disposées en croix par rapport au deuxième canal 3. Ainsi, des zones du premier canal 2 ne sont pas entièrement comblées par des ailettes conductrices. Lesdites zones sont comblées soit par des ailettes soit par des éléments de fixation permettant la fixation de l'échangeur thermique 1 comme illustré en figure 3D par exemple.

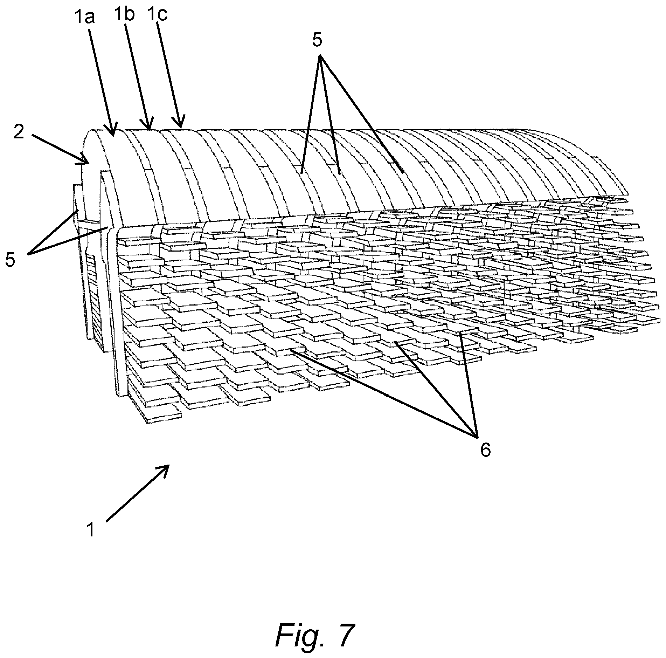

Quelles que soient les configurations représentées aux figures 6A à 6J, les ailettes conductrices d'une première portion conductrice transversale 1a, 1b, 1c, 1d, etc. peuvent être alignées, comme illustré notamment en figure 2, ou disposées en quinconce, comme illustré en figure 7, par rapport aux ailettes conductrices d'une deuxième portion transversale 1a, 1b, 1c, 1d, etc.

Bien entendu, l'invention n'est pas limitée aux modes de réalisation décrits et représentés aux figures annexées. Des modifications restent possibles, notamment du point de vue de la constitution des divers éléments ou par substitution d'équivalents techniques, sans sortir pour autant du domaine de protection de l'invention.

## Revendications

1. Echangeur thermique (1) pour dispositif de ventilation double-flux comprenant au moins un premier canal (2) configuré pour être traversé par un flux d'air sortant (Fₒᵤₜ) et au moins un deuxième canal (3) configuré pour être traversé par un flux d'air entrant (Fᵢₙ), le premier canal (2) comprenant au moins une surface d'échange thermique (6) commune avec le deuxième canal (3), le premier canal (2) et le deuxième canal (3) s'étendant chacun longitudinalement par rapport à un axe longitudinal (B-B) de l'échangeur thermique (1), l'échangeur thermique (1) comprenant au moins une première portion transversale (1a, 1b, 1c, 1d, le) conductrice thermiquement comportant une première partie du premier canal (2) et une première partie du deuxième canal (3), une deuxième portion transversale (1a, 1b, 1c, 1d, 1e) conductrice thermiquement comportant une deuxième partie du premier canal (2) et une deuxième partie du deuxième canal (3), l'échangeur thermique étant **caractérisé en ce que** la première portion transversale (1a, 1b, 1c, 1d, 1e) est reliée au moins partiellement à la deuxième portion transversale (1a, 1b, 1c, 1d, 1e) par un organe d'isolation thermique (5).

2. Echangeur thermique selon la revendication 1, dans lequel l'organe d'isolation thermique (5) présente une forme sensiblement identique à une portion transversale (1a, 1b, 1c, 1d, 1e) de l'échangeur thermique (1).

3. Echangeur thermique selon l'une quelconque des revendications 1 ou 2, comprenant une pluralité d'ailettes (6) conductrices s'étendant dans le premier canal (2) et se prolongeant dans le deuxième canal (3).

4. Echangeur thermique selon la revendication 3, dans lequel des stries sont ménagées sur la pluralité d'ailettes (6) conductrices.

5. Echangeur thermique selon l'une quelconque des revendications 1 à 4, dans lequel l'organe d'isolation thermique (5) forme un interstice (5a) entre la première portion transversale (1a, 1b, 1c, 1d, 1e) et la deuxième portion transversale (1a, 1b, 1c, 1d, 1e), ledit interstice étant configuré pour l'évacuation de condensats (20).

6. Echangeur thermique selon l'une quelconque des revendications 1 à 5, comprenant une pluralité de portions transversales (1a, 1b, 1c, 1d, 1e) séparées au moins partiellement les unes des autres par au moins un organe d'isolation thermique (5).

7. Echangeur thermique selon l'une quelconque des revendications 1 à 6, dans lequel le premier canal (2) est agencé au moins partiellement autour du deuxième canal (3).

8. Echangeur thermique selon l'une quelconque des revendications 1 à 7, comprenant un troisième canal (4) délimitant un couloir de déviation d'air.

9. Echangeur thermique selon la revendication 8, dans lequel le deuxième canal (3) est agencé au moins partiellement autour du troisième canal (4).

10. Echangeur thermique selon l'une quelconque des revendications 8 ou 9, dans lequel un organe de régulation (7) de flux d'air est logé dans le troisième canal (4), ledit organe de régulation (7) étant configuré pour ouvrir et/ou obturer le troisième canal (4).

11. Echangeur thermique selon l'une quelconque des revendications 1 à 10, dans lequel l'organe d'isolation thermique est réalisé au moins partiellement en un matériau enthalpique.

## Patentansprüche

1. Wärmetauscher (1) für eine Belüftungsvorrichtung mit doppeltem Luftstrom, mindestens einen ersten Kanal (2) umfassend, der konfiguriert ist, um durch einen austretenden Luftstrom (Fₒᵤₜ) durchquert zu werden, und mindestens einen zweiten Kanal (3), der konfiguriert ist, um durch einen eintretenden Luftstrom (Fᵢₙ) durchquert zu werden, wobei der erste Kanal (2) mindestens eine gemeinsame Wärmetauschoberfläche (6) mit dem zweiten Kanal (3) umfasst, wobei sich der erste Kanal (2) und der zweite Kanal (3) jeweils längs im Verhältnis zu einer Längsachse (B-B) des Wärmetauschers (1) erstrecken, wobei der Wärmetauscher (1) mindestens einen ersten wärmeleitenden querlaufenden Abschnitt (1a, 1b, 1c, 1d, 1e) umfasst, der einen ersten Teil des ersten Kanals (2) und einen ersten Teil des zweiten Kanals (3) beinhaltet, einen zweiten wärmeleitenden querlaufenden Abschnitt (1a, 1b, 1c, 1d, 1e), der einen zweiten Teil des ersten Kanals (2) und einen zweiten Teil des zweiten Kanals (3) beinhaltet, wobei der Wärmetauscher **dadurch gekennzeichnet ist, dass** der erste querlaufende Abschnitt (1a, 1b, 1c, 1d, 1e) durch ein Wärmedämmorgan (5) mindestens teilweise an den zweiten querlaufenden Abschnitt (1a, 1b, 1c, 1d, 1e) angeschlossen ist.

2. Wärmetauscher nach Anspruch 1, wobei das Wärmedämmorgan (5) eine im Wesentlichen identische Form wie ein querlaufender Abschnitt (1a, 1b, 1c, 1d, 1e) des Wärmetauschers (1) aufweist.

3. Wärmetauscher nach einem der Ansprüche 1 oder 2, umfassend eine Vielzahl von leitenden Rippen (6), die sich in den ersten Kanal (2) erstrecken, und sich in den zweiten Kanal (3) hinziehen.

4. Wärmetauscher nach Anspruch 3, wobei Rillen in die Vielzahl von leitenden Rippen (6) eingearbeitet sind.

5. Wärmetauscher nach einem der Ansprüche 1 bis 4, wobei das Wärmedämmorgan (5) einen Zwischenraum (5a) zwischen dem ersten querlaufenden Abschnitt (1a, 1b, 1c, 1d, 1e) und dem zweiten querlaufenden Abschnitt (1a, 1b, 1c, 1d, 1e) bildet, wobei der Zwischenraum zum Ausbringen der Kondensate (20) konfiguriert ist.

6. Wärmetauscher nach einem der Ansprüche 1 bis 5, umfassend eine Vielzahl von querlaufenden Abschnitten (1a, 1b, 1c, 1d, 1e), die mindestens teilweise durch mindestens ein Wärmedämmorgan (5) voneinander getrennt sind.

7. Wärmetauscher nach einem der Ansprüche 1 bis 6, wobei der erste Kanal (2) mindestens teilweise um den zweiten Kanal (3) herum angeordnet ist.

8. Wärmetauscher nach einem der Ansprüche 1 bis 7, umfassend einen dritten Kanal (4), der einen Luftumleitkorridor eingrenzt.

9. Wärmetauscher nach Anspruch 8, wobei der zweite Kanal (3) mindestens teilweise um den dritten Kanal (4) herum angeordnet ist.

10. Wärmetauscher nach einem der Ansprüche 8 oder 9, wobei ein Regelungsorgan (7) des Luftstroms in dem dritten Kanal (4) untergebracht ist, wobei das Regelungsorgan (7) konfiguriert ist, um den dritten Kanal (4) zu öffnen und/oder zu verschließen.

11. Wärmetauscher nach einem der Ansprüche 1 bis 10, wobei das Wärmedämmorgan mindestens teilweise aus einem Enthalpie-Material hergestellt ist.

## Claims

1. A heat exchanger (1) for a double-flow ventilation device comprising at least one first channel (2) configured to be crossed over by an outgoing air flow (Fₒᵤₜ) and at least one second channel (3) configured to be crossed over by an incoming air flow (Fin), the first channel (2) comprising at least one heat exchange surface (6) shared with the second channel (3), each of the first channel (2) and the second channel (3) extending longitudinally relative to a longitudinal axis (B-B) of the heat exchanger (1), the heat exchanger (1) comprising at least a thermally-conductive first transverse portion (1a, 1b, 1c, 1d, 1e) including a first portion of the first channel (2) and a first portion of the second channel (3), a thermally-conductive second transverse portion (1a, 1b, 1c, 1d, 1e) including a second portion of the first channel (2) and a second portion of the second channel (3), the heat exchanger being **characterized in that** the first transverse portion (1a, 1b, 1c, 1d, 1e) is connected at least partially to the second transverse portion (1a, 1b, 1c, 1d, 1e) by a thermal insulation member (5).

2. The heat exchanger according to claim 1, wherein the thermal insulation member (5) has a shape substantially identical to a transverse portion (1a, 1b, 1c, 1d, 1e) of the heat exchanger (1).

3. The heat exchanger according to any one of claims 1 or 2, comprising a plurality of conductive fins (6) extending in the first channel (2) and prolonged into the second channel (3).

4. The heat exchanger according to claim 3, wherein ridges are formed on the plurality of conductive fins (6).

5. The heat exchanger according to any one of claims 1 to 4, wherein the thermal insulation member (5) forms a gap (5a) between the first transverse portion (1a, 1b, 1c, 1d, 1e) and the second transverse portion (1a, 1b, 1c, 1d, 1e), said gap being configured for discharging condensates (20).

6. The heat exchanger according to any one of claims 1 to 5, comprising a plurality of transverse portions (1a, 1b, 1c, 1d, 1e) separated at least partially from each other by at least one thermal insulation member (5).

7. The heat exchanger according to any one of claims 1 to 6, wherein the first channel (2) is arranged at least partially around the second channel (3).

8. The heat exchanger according to any one of claims 1 to 7, comprising a third channel (4) delimiting an air deflection corridor.

9. The heat exchanger according to claim 8, wherein the second channel (3) is arranged at least partially around the third channel (4).

10. The heat exchanger according to any one of claims 8 or 9, wherein an air flow regulating member (7) is housed in the third channel (4), said regulating member (7) being configured to open and/or seal the third channel (4).

11. The heat exchanger according to any one of claims 1 to 10, wherein the thermal insulation member is made at least partially of an enthalpic material.
